# EUROPEAN PATENT SPECIFICATION

(11) **EP 2 829 751 B1**
(45) Date of publication and mention of the grant of the patent: **16.05.2018**
(21) Application number: 13764037.1
(22) Date of filing: 18.03.2013
(51) Int. Cl.: F16C 32/04, B82B 3/00, F41A 21/00, B82Y 30/00, F42B 12/82, F41A 21/22, F41A 29/04

(54) **APPARATUS HAVING FRICTION PREVENTING FUNCTION, AND METHOD FOR MANUFACTURING AND DRIVING SAME**
VORRICHTUNG MIT REIBVERMEIDUNGSFUNKTION UND VERFAHREN ZUR HERSTELLUNG UND ANSTEUERUNG DERSELBEN
APPAREIL AYANT UNE FONCTION DE PRÉVENTION DE FROTTEMENT ET SON PROCÉDÉ DE FABRICATION ET D'ENTRAÎNEMENT

(30) Priority: 19.03.2012 KR 20120027757; 12.03.2013 KR 20130026303
(43) Date of publication of application: 28.01.2015
(73) Proprietor: Samsung Electronics Co., Ltd., Suwon-si, Gyeonggi-do 443-742 (KR)
(72) Inventor: CHO, Sungnae, Gyeonggi-do 443-803 (KR)
(74) Representative: Portch, Daniel
(86) International application number: PCT/KR2013/002191
(87) International publication number: WO 2013/141547

(56) References cited:
- EP-A1- 1 580 528
- EP-A1- 1 930 399
- EP-B1- 1 305 628
- EP-B1- 1 861 892
- WO-A2-2010/102024
- DE-A1- 10 355 312
- JP-A- H06 307 451
- JP-A- 2007 190 604
- US-A1- 2002 027 819
- US-A1- 2011 192 521

## Description

### FIELD OF THE INVENTION

Apparatuses and methods consistent with exemplary embodiments relate to an apparatus related to friction, and more particularly, to an apparatus with a friction preventing function and a method of manufacturing the apparatus.

### BACKGROUND OF THE INVENTION

An object that rolls, rotates, or linearly moves contacts another relevant object, and thus, friction between the two objects is generated. Such friction is necessary for a start operation and a stop operation of an object. However, friction may be a factor which hinders a continuity of motion of a moving object.

Friction generated during motion of an object generates heat, which may affect not only the moving object but also other objects related to the moving object.

Accordingly, oil or grease may be used to decrease the friction. However, oil and the grease are harmful to the environment. Also, friction may not be completely removed by using oil or grease. Oil and grease have a lower performance as time passes, and accordingly, the efficiency of oil or grease is decreased as time passes.

DE 103 55 312 describes a low loss bearing for turning parts using an electrostatic forces.

JP H06 307451 describes a bearing using electrostatic forces.

Dielectrically engineered microparticles are described in EP 1 305 628.

### SUMMARY OF THE INVENTION

One or more exemplary embodiments provide an apparatus with a friction preventing function using an electrical method.

One or more exemplary embodiments provide a method of manufacturing the apparatus.

Aspects of the exemplary embodiments will be set forth in part in the description which follows and, in part, will be apparent from the description, or may be learned by practice of the presented embodiments.

According to an aspect of an exemplary embodiment, there is provided a friction preventing apparatus according to claim 1

The nanoparticles may be positively charged and may adhere to one of the first and second objects having a lower potential.

The nanoparticles may be negatively charged and may adhere to one of the first and second objects having a higher potential.

Each of the nanoparticles has a charged core and a shell surrounding the core.

The apparatus may further include a material film covering the nanoparticles and filling gaps between the nanoparticles.

The first object may have an outer circumferential surface, and the second object may surround the outer circumferential surface of the first object.

The first object may be a flat panel, and the second object may be moveable with respect to the flat panel.

The first object may be a rail, and the second object may surround the rail.

The first object may include a conductive layer facing the second object, and the second object may include a conductive layer facing the first object.

The material film may be paint or paste.

The first object may be a conductive pipe, and the second object may be disposed inside the pipe and may be moveable with respect to the pipe.

The pipe may be a gun barrel or a cannon barrel, and the second object may be a bullet or a cannon ball.

The nanoparticles may be uniformly distributed over an entirety of the surface of one of the first and second objects or may be uniformly distributed only over a plurality of areas spaced part from one another on the surface of the one of the first and second objects.

According to an aspect of another exemplary embodiment, there is provided a method of manufacturing an apparatus according to claim 11.

The charging of the nanoparticles may include forming a charging potential difference between the first and second objects, wherein the charging potential difference is greater than the friction-preventing potential difference.

The attaching of the nanoparticles may include forming a material film that covers the nanoparticles and fills gaps between the nanoparticles.

According to an aspect of another exemplary embodiment, a method of manufacturing an apparatus, the method includes charging nanoparticles; attaching the charged nanoparticles onto a first object; disposing a second object to face the first object, such that the charged nanoparticles are disposed between the first object and the second object; and forming a potential difference between the first and second objects.

Each the nanoparticles may include a charged core and a shell surrounding the core.

The attaching of the nanoparticles may include forming a material film that covers the nanoparticles and fills gaps between the nanoparticles.

### BRIEF DESCRIPTION OF THE DRAWINGS

These and/or other exemplary aspects and advantages will become apparent and more readily appreciated from the following description of exemplary embodiments, taken in conjunction with the accompanying drawings in which:
FIGS. 1A to 2C are mimetic diagrams for describing a basic principle applied to an apparatus with a friction preventing function according to an exemplary embodiment;
FIG. 3 is a cross-sectional view of a nano particle used in an apparatus with a friction preventing function, according to an exemplary embodiment;
FIGS. 4 to 7 are cross-sectional views of apparatuses with a friction preventing function according to exemplary embodiments;
FIG. 8 is a cross-sectional view of the apparatus shown in FIG. 6 including a nano material film instead of nano particles;
FIG. 9 is an enlarged cross-sectional view of a region A1 of FIG. 8;
FIG. 10 is a cross-sectional view of the apparatus shown in FIG. 4 including a nano material film instead of nano particles;
FIG. 11 is a cross-sectional view of an apparatus with a friction preventing function according to another exemplary embodiment;
FIG. 12 is a cross-sectional view of an apparatus with a friction preventing function including nano particles configured as a multi-layered structure according to an exemplary embodiment;
FIGS. 13 and 14 are cross-sectional views for describing an exemplary method of manufacturing an apparatus with a friction preventing function;
FIG. 15 is a 3-dimensional view of an apparatus with a friction preventing function;
FIG. 16 is a cross-sectional view of FIG. 15 cut along the direction 16-16';
FIG. 17 is an enlarged sectional view of portions of FIG. 16;
FIG. 18 is a cross-sectional view illustrating a state of a housing and a rotor when a brake is actuated in the apparatus of FIG. 15 or an engine of a vehicle is stopped;
FIG. 19 is a cross-sectional view illustrating voltage application condition that allows friction preventing function to be performed in the apparatus of FIG. 15; and
FIG. 20 is a cross-sectional view illustrating voltage application condition that allows a brake to be actuated in the apparatus of FIG. 15.

### DETAILED DESCRIPTION OF THE EMBODIMENTS

Hereinafter, exemplary embodiments will be described in detail with reference to the attached drawings. In the drawings, the thicknesses of layers and regions may be exaggerated for clarity.

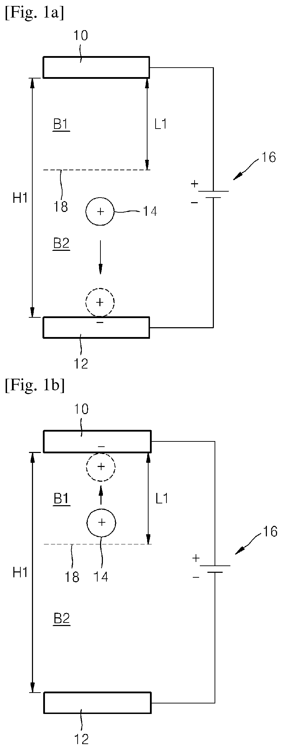

FIGS. 1A to 2C are mimetic diagrams for describing a basic principle applied to an apparatus with a friction preventing function according to an exemplary embodiment.

FIGS. 1A and 1B are mimetic diagrams for describing the movement of a positively charged point particle 14between first and second flat panels 10 and 12 that are parallel to each other and to which a direct current (DC) voltage is applied, according to an initial position of the point particle 14.

Here, the point particle 14 may be a particle that does not internally have a structure like an electron, a proton, a positron, or the like. In FIG. 1, the point particle 14 may be a positron.

Referring to FIG. 1A, the first flat panel 10 and the second flat panel 12 face each other and are spaced apart from each other by a predetermined distance H1. The first and second flat panels 10 and 12 are conductors. The first and second flat panels 10 and 12 are connected to a power source 16. The power source 16 may be a DC power source. The first flat panel 10 is connected to a positive electrode of the power source 16. The second flat panel 12 is connected to a negative electrode of the power source 16. An area between the first and second flat panels 10 and 12 is divided into a first area B1 and a second area B2. A boundary 18 between the first and second areas B1 and B2 is spaced apart from the first flat panel 10 by a first length L1. The first area B1 is an area between the first flat panel 10 and the boundary 18, and the second area B2 is an area between the boundary 18 and the second flat panel 12. A location of the boundary 18 may vary according to a size of the power source 16, or the like.

The boundary 18 may be closer to the first flat panel 10 than the second flat panel 12.

In FIG. 1A, when the positively charged point particle 14 is located in the second area B2 at an early stage, the point particle 14 moves toward the second flat panel 12 to adhere to the second flat panel 12.

As shown in FIG. 1B, if the point particle 14 is located in the first area B1 at an early stage, even though the point particle 14 is positively charged, the point particle 14 moves toward the first flat panel 10 to adhere to the first flat panel 10. The reason is that when the point particle 14 is located in the first area B1, a negatively induced charge is generated due to the existence of the point particle 14, and thus, a gravitational force between the point particle 14 and the negatively induced charge is stronger than repulsive force between the point particle 14 and an electric field generated between the first and second flat panels 10 and 12 according to the application of power by the power source 16. On the other hand, in the second area B2, the repulsive force between the electric field and the point particle 14 is stronger than the gravitational force between the point particle 14 and the negatively induced charge. Accordingly, when the point particle 14 is located in the second area B2, the point particle 14 moves toward the second flat panel 12 to adhere to the second flat panel 12, as shown in FIG. 1A.

When the point particle 14 is negatively charged instead of being positively charged, that is, when the point particle 14 is an electron, movement of the point particle 14 according to the location of the point particle 14 is opposite to a case when the point particle 14 is positively charged.

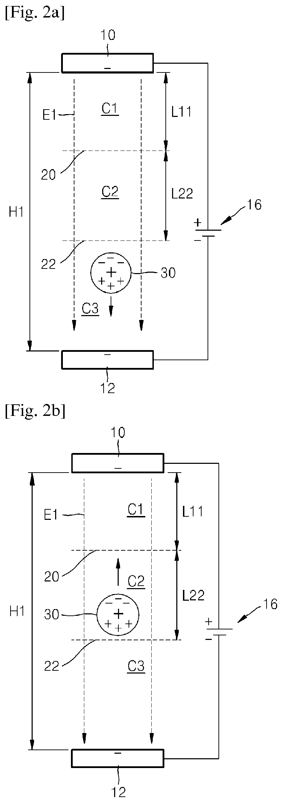

When the point particle 14 of FIG. 1 is a particle having an internal structure of, for example, a nanoparticle, the movement of the nanoparticle is changed. FIGS. 2A to 2C show movement of a positively charged nanoparticle 30 that is located between the first and second flat panels 10 and 12.

In FIGS. 2A to 2C, an area between the first and second flat panels 10 and 12 is divided into first to third areas C1 to C3. A first boundary 20 between the first area C1 and the second area C2 is spaced apart from the first flat panel 10 at a first length L11. A second boundary 22 between the second area C2 and the third area C3 is located between the first boundary 20 and the second flat panel 12 and is spaced apart from the first boundary 20 at a second length L22.

FIG. 2A shows movement of the positively charged nanoparticle 30 at an early stage. Reference numeral E1 denotes an electric field generated between the first and second flat panels 10 and 12 due to application of power by the power source 16. Also, a mark '+' shown in the middle of the nanoparticle 30 is an artificial charge, for example, a charge that is charged due to application of an additional voltage. Positive charges (+) and negative charges (-) distributed under a surface of the nanoparticle 30 are induced by the electric field E1 and are depolarization charges. Thus, the electric field E1 may be offset inside the nanoparticle 30 due to the depolarization charges. From among the depolarization charges, the positive charges are distributed on the surface of the nanoparticle 30 that faces the second flat panel 12 having a relatively low voltage, and the negative charges are distributed on the surface of the nanoparticle 30 that faces the first flat panel 10 having a relatively high voltage.

Referring to FIG. 2A, the nanoparticle 30 located in the third area C3 moves toward the second flat panel 12 by the electric field E1 between the first and second flat panels 10 and 12 to adhere to the second flat panel 12. When the positively charged nanoparticle 30 is located between the first and second flat panels 10 and 12, negative charges (-) are induced in the first and second flat panels 10 and 12 by the charges charged in the nanoparticle 30. When the charges charged in the nanoparticle 30 are negative charges, positive charges are induced in the first and second flat panels 10 and 12.

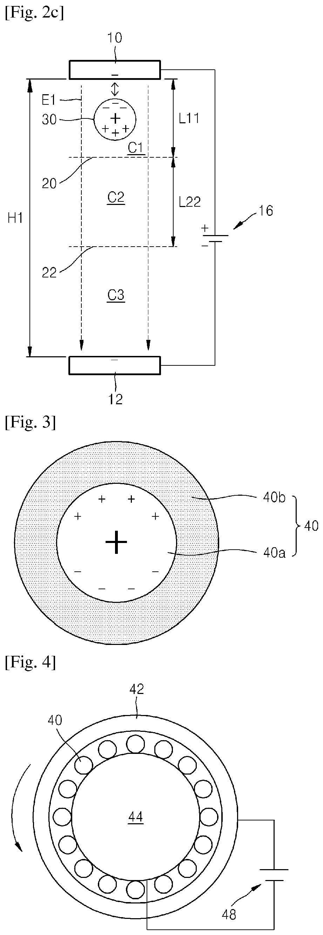

As shown in FIG. 2B, the nanoparticle 30 may be located in the second area C2 at an early stage. The second area C2 is an area corresponding to the first area B1 of FIG. 1A. In the second area C2, a strong gravitational force is applied between the charges charged in the middle of the nanoparticle 30 and negative charges (-) induced in the first flat panel 10 by the charges charged in the middle of the nanoparticle 30. The gravitational force is proportional to 1/r², wherein 'r' denotes a distance between the first flat panel 10 and the nanoparticle 30. Even though the nanoparticle 30 located in the second area C2 is in the electric field E1, the nanoparticle 30 moves toward the first flat panel 10 instead of the second flat panel 12, that is, in a direction opposite to the electric field E1. When the nanoparticle 30 is located in the first area C1, as shown in FIG. 2C, a strong repulsive force (hereinafter, referred to as a first repulsive force) is applied between negative charges (-) induced in the first flat panel 10 and negative charges induced in the surface of the nanoparticle 30. The first repulsive force is proportional to 1/r³. Thus, in the first area C1, as a distance between the nanoparticle 30 and the first flat panel 10 is decreased, the first repulsive force is sharply increased. Accordingly, the nanoparticle 30 may not contact the first flat panel 10, and thus, the nanoparticle 30 moves away from the first flat panel 10 and moves toward the second area C2. In the second area C2, since the gravitational force is strong, the nanoparticle 30 moves toward the third area C3. Consequently, the nanoparticle 30 vibrates by moving between the first area C1 and the second area C2. The charges induced in the surface of the nanoparticle 30 are due to the electric field E1, a magnitude of the electric field E1 is proportional to a potential difference between the first and second flat panels 10 and 12, and the potential difference is due to the power source 16. Thus, by adjusting a DC voltage applied between the first and second flat panels 10 and 12, contact between the nanoparticle 30 and the first flat panel 10 may be prevented and controlled, which shows that the contact between the first and second flat panels 10 and 12 may be prevented and controlled by simply applying the DC voltage between the first and second flat panels 10 and 12. For example, friction between the first and second flat panels 10 and 12 may be prevented and a degree of contact may be controlled by maintaining a distance H1 between the first and second flat panels 10 and 12 that is equal to or less than the sum (L11+L22) of the first length L11 and the second length L22 when the nanoparticle 30 adheres to the surface of the second flat panel 12.

The nanoparticle 30 is coated with an insulating material to maintain a charge distribution of the nanoparticle 30. The coating of the nanoparticle 30 may use any of various methods.

Hereinafter, an apparatus with a friction preventing function according to embodiments of the present invention using the above-described principle will be described.

FIG. 3 is a cross-sectional view of a nanoparticle 40 used in an apparatus with a friction preventing function, according to an embodiment of the present invention. The nanoparticle 40 includes a conductive core 40a and a shell 40b surrounding the core 40a. The shell 40b may be, for example, aluminum oxide or silicon oxide. The shell 40b protects charges (+) charged inside the core 40a and depolarization charges (+, -) on a surface of the core 40a. Thus, a thickness of the shell 40b may be set to be proper for the protective function of the shell 40b. The thickness of the shell 40b may be uniform at a circumference of the core 40a. The core 40a may correspond to the nanoparticle 30 described with reference to FIGS. 2A to 2C. The core 40a may be, for example, a nano-sized aluminum (Al) particle. As in the case with the nanoparticle 40, a 'nanoparticle' described below refers to a particle having a diameter in a range between several nm and several hundreds of nm. For convenience of illustration and description, the nanoparticle 40 is shown as one circle.

FIG. 4 shows an apparatus (hereinafter, referred to as a first apparatus) with a friction preventing function according to an embodiment of the present invention.

Referring to FIG. 4, the first apparatus includes an axis 44 with a predetermined diameter in its center. The first apparatus includes a cylindrical structure 42 surrounding the axis 44. The cylindrical structure 42 is parallel to the axis 44. The cylindrical structure 42 and the axis 44 are conductors and spaced apart from each other. A gap between the cylindrical structure 42 and the axis 44 may be uniform at a circumference of the axis 44. The gap may be less than the sum (L11+L22) of the first length L11 and the second length L22 described with reference to FIGS. 2A to 2C. Conditions of the gap may be applied to another apparatus to be described below. The cylindrical structure 42 may be a rotating body that rotates around the axis 44. On the contrary, the cylindrical structure 42 may be fixed, and the axis 44 may rotate. A rotational axis of the cylindrical structure 42 may be the same as the center of the axis 44. The cylindrical structure 42 may be a rotating body that rotates around the center of the axis 44 or may be an object that moves along the axis 44. Materials of the cylindrical structure 42 and the axis 44 may be similar to or the same as those of a rotating body and its axis used in a general mechanical apparatus. A plurality of nanoparticles 40 are disposed between the axis 44 and the cylindrical structure 42. The nanoparticles 40 are uniformly distributed on an outer circumferential surface of the axis 44. The axis 44 is connected to a positive electrode (terminal) of a power source 48, and the cylindrical structure 42 is connected to a negative electrode (terminal) of the power source 48. The power source 48 may be a DC voltage source. The principle described with reference to FIGS. 2A to 2C applies to each nanoparticle 40. Thus, since the cylindrical structure 42 and the axis 44 do not contact each other in the first apparatus, friction between the cylindrical structure 42 and the axis 44 may be prevented. As such, since friction may be simply prevented by using the nanoparticle 40 and applying the DC voltage, there is no need to use oil or grease that is conventionally used. In this regard, the first apparatus may be eco-friendly, and this may apply to another apparatus to be described. Also, since a current is not directly applied to prevent friction, high efficiency may be maintained, and also even though a general battery is used, the apparatus may be used for long hours.

Although not shown in the drawing, the nanoparticles 40 may be uniformly distributed on an inner circumferential surface of the cylindrical structure 42 instead of an outer circumferential surface of the axis 44. When the nanoparticles 40 are distributed on the inner circumferential surface of the cylindrical structure 42, the cylindrical structure 42 and the axis 44 are connected to each other with respect to the power source 48 in a way opposite to that shown in FIG. 4. Also, even when charges charged in the middle of the nanoparticles 40 are negative charges instead of positive charges, the cylindrical structure 42 and the axis 44 are connected to each other with respect to the power source 48 in a way opposite to that shown in FIG. 4.

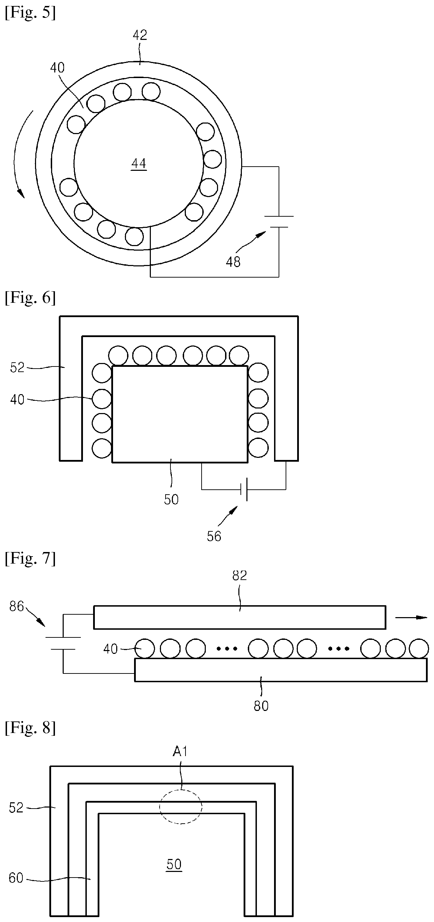

On the other hand, even though the nanoparticles 40 are uniformly distributed entirely on the outer circumferential surface of the axis 44, the nanoparticles 40 may be distributed only on a part of the outer circumferential surface of the axis 44, as shown in FIG. 5. In FIG. 5, the DC voltage applied to the axis 44 and the cylindrical structure 42 may be increased compared to that in the case of FIG. 4.

FIG. 6 shows an apparatus (hereinafter, referred to as a second apparatus) with a friction preventing function according to another embodiment of the present invention.

Referring to FIG. 6, the second apparatus includes a fixed first object 50 and a second object 52 that is movable along the first object 50. The first object 50 and the second object 52 are conductors that are spaced apart from each other. The first and second objects 50 and 52 may or may not entirely be conductors. For example, portions of the first and second objects 50 and 52 that face each other may be conductors, and the remaining portions of the first and second objects 50 and 52 may not be conductors. The first object 50 may be a linear rail. A cross-section of the first object 50 may have a rectangular shape, or alternatively, the cross-section of the first object 50 may have a semicircular shape or a triangular shape. A plurality of nanoparticles 40 may adhere to a surface of the first object 50 facing the second object 52. The nanoparticles 40 may be uniformly distributed entirely on the surface of the first object 50. Although the nanoparticles 40 are spaced apart from one another in FIG. 6, each nanoparticle 40 includes a shell 40b having an insulating property, as shown in FIG. 3, and thus, the nanoparticles 40 may contact one another. The second object 52 is formed to surround the surface of the first object 50 to which the nanoparticles 40 adhere. The second object 52 may be a part of a machine (for example, a vehicle or a train) that moves above the first object 50. An inner surface of the second object 52 may be deformed to correspond to a shape of the surface of the first object 50. The first and second objects 50 and 52 may be connected to a DC voltage power source 56. A positive electrode and a negative electrode of the power source 56 are connected to the second object 52 and the first object 50, respectively.

Although not shown in FIG. 6, the nanoparticles 40 may adhere to the inner surface of the second object 52 instead of the surface of the first object 50. Here, the connection of the power source 56 is performed in a way opposite to that shown in FIG. 6.

FIG. 7 shows an apparatus (hereinafter, referred to as a third apparatus) with a friction preventing function according to another embodiment of the present invention.

Referring to FIG. 7, the third apparatus includes a lower structure 80, an upper structure 82, and a plurality of nanoparticles 40. The lower structure 80 is fixed and may be a flat panel having a predetermined length. A top surface of the lower structure 80 may be flat. The nanoparticles 40 adhere to a top surface of the lower structure 80. The upper structure 82 may be an object that moves above the lower structure 80 or may be a carrier. For convenience of illustration, the upper structure 82 is shown as a flat panel in FIG. 7. Thus, a shape of the upper structure 82 may vary depending on the intended use. The lower and upper structures 80 and 82 may be conductors. The lower and upper structures 80 and 82 may entirely be conductors, or portions of the lower and upper structures 80 and 82 that are necessary for prevention of friction may be conductors. For example, in the case of the lower structure 80, a conductive layer may be disposed only on the top surface of the lower structure 80, and in the case of the upper structure 82, a conductive layer may be disposed only on a bottom surface of the upper structure 82. A DC voltage power source 86 is connected to the lower and upper structures 80 and 82. The lower structure 80 and the upper structure 82 are connected to a negative electrode terminal and a positive electrode terminal of the power source 86, respectively. When the power source 86 is in a connected state, the upper structure 82 is maintained in a non-contact state. That is, the upper structure 82 is disposed above the lower structure 80 without contacting the lower structure 80. In this state, if a force is horizontally applied to the upper structure 82, the upper structure 82 may be easily moved horizontally without friction against the lower structure 80. The nanoparticles 40 may adhere to the upper structure 82, which is a movable body, instead of being disposed in the lower structure 80. At this time, the connection of the power source 86 is performed in a way opposite to that shown in FIG. 7.

Although not shown in FIGS. 4 to 7, an adherent layer may be formed on a surface to which the nanoparticles 40 adhere, and the nanoparticles 40 may adhere to the adherent layer.

FIG. 8 show an apparatus (hereinafter, referred to as a fourth apparatus) with a friction preventing function according to another embodiment of the present invention.

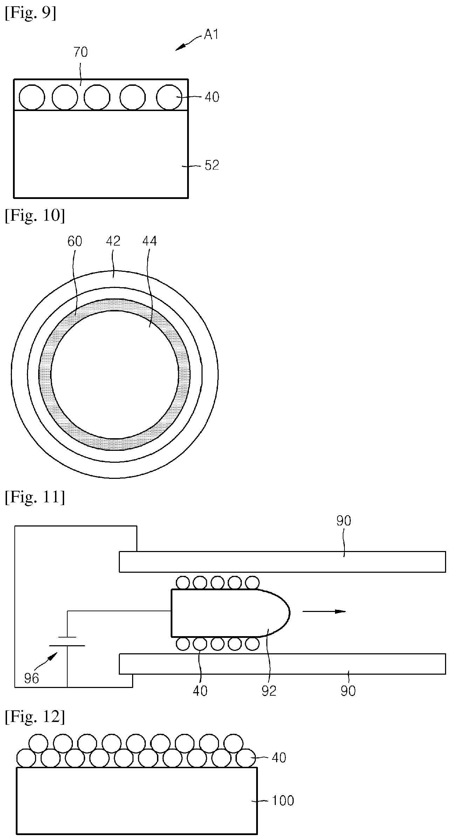

Referring to FIG. 8, the fourth apparatus may be the same as the second apparatus described with reference to FIG. 6 except that a nano material film 60 is coated on a surface of the first object 50. FIG. 9 is an enlarged cross-sectional view of a region A1 including a part of the nano material film 60 of FIG. 8.

Referring to FIG. 9, the nano material film 60 includes a plurality of nanoparticles 40 and a material film 70 covering the nanoparticles 40. The material film 70 attaches the nanoparticles 40 to the first object 50 to fix the nanoparticles 40. The material film 70 may be an insulating material, and its surface may be flat. The material film 70 may be paint or paste. Thus, the nano material film 60 may be formed by mixing the nanoparticle 40 with paint or paste, kneading them, coating a resultant on a surface of the first object 50, and drying the resultant.

FIG. 10 shows a case where the nano material film 60 is coated on an outer circumferential surface of the axis 44 instead of the nanoparticles 40. In the apparatuses shown in FIGS. 5 and 7, the nano material film 60 may be provided instead of the nanoparticles 40. Even when the nano material film 60 is provided instead of the nanoparticles 40, the nano material film 60 may be coated on another surface facing the original surface instead of being coated on the original surface.

FIG. 11 shows an apparatus (hereinafter, referred to as a fifth apparatus) with a friction preventing function according to another embodiment of the present invention.

Referring to FIG. 11, the fifth apparatus includes a pipe 90 having a predetermined length and a movable body 92 that is released or launched through the pipe 90. The pipe 90 may be a metallic pipe or a nonmetallic pipe in which a conductive layer is coated on an inner surface. Also, the pipe 90 may be a gun barrel of a personal weapon or may be a cannon barrel of a cannon or a tank. If the pipe 90 is a gun barrel or a cannon barrel, the movable body 92 may be a launcher such as a bullet or a cannon ball. A DC power source 96 is connected to the pipe 90 and the movable body 92. A positive electrode terminal and a negative electrode terminal of the power source 96 are connected to the pipe 90 and the movable body 92, respectively. If the movable body 92 is a launcher, the movable body 92 is released out of the pipe 90, and simultaneously, the connection between the movable body 92 and the power source 96 is lost. A plurality of nanoparticles 40 may adhere to an inner surface of the pipe 90. At this time, the connection of the power source 96 is performed in an opposite way. Alternatively, the nano material film 60 may be provided instead of the nanoparticles 40.

Although the nanoparticles 40 of the above-described apparatuses are configured as a single-layered structure to adhere to a surface, a plurality of nanoparticles 40 may be configured as a multi-layered structure to adhere to a surface of an object 100 as shown in FIG. 12. Although FIG. 12 shows the nanoparticles 40 configured as a double-layered structure, the present invention is not limited thereto.

Hereinafter, a method of manufacturing apparatuses with a friction preventing function, according to embodiments of the present invention, will be described.

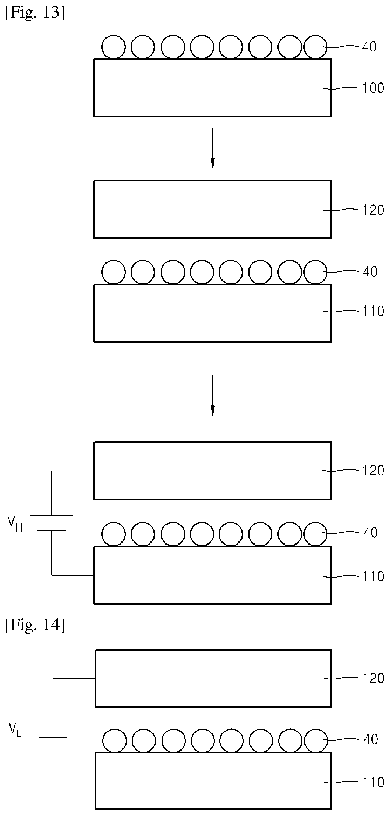

Referring to FIG. 13, a plurality of nanoparticles 40 adhere to a surface of a first object 110. A second object 120 is disposed to face the first object 110 across the nanoparticles 40. Next, a first voltage VH is applied between the first and second objects 110 and 120. Electrons are emitted from the nanoparticles 40 due to the application of the first voltage VH, and net charges of the nanoparticles 40 become positive charges (+). Accordingly, the nanoparticles 40 are positively charged (a state where positive charges are formed in the middle of the core 40a of FIG. 3). A degree of the emission of the electrons may be controlled by adjusting the first voltage VH.

A second voltage VL is applied between the first and second objects 110 and 120, as shown in FIG. 14. The second voltage VL is applied to prevent friction, and charges (+, -) on the surface of the core 40a of FIG. 3 are induced by the second voltage VL. The second voltage VL may be lower than the first voltage VH. A gap between the first and second objects 110 and 120 may be maintained equal to or less than the sum (L11+L22) of the first length L11 and the second length L22 shown in FIGS. 2A to 2C before or at the time when the second voltage VL is applied.
[1] As described above, the nanoparticles 40 may be charged after the nanoparticles 40 are adhered onto the first object 110, or may be charged before the nanoparticles 40 are adhered onto the first object 110. In other words, already charged nanoparticles 40 may be adhered onto the first object 110. Also, the nano material film 60 described with reference to FIG. 8, instead of the nanoparticles 40, may be coated on the first object 110. The nano material film 60 may be charged in the same way as the nanoparticles 40.

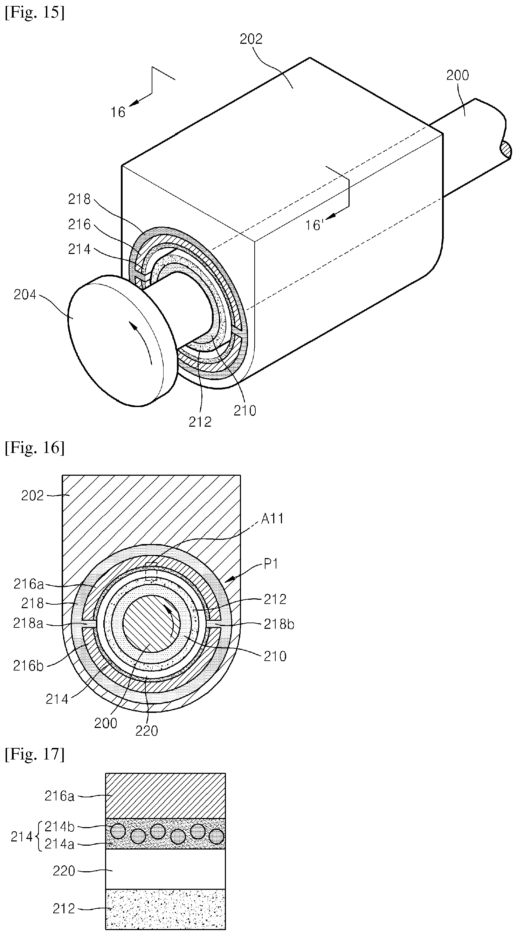

FIG. 15 shows a 3-dimensional view of an apparatus (hereinafter, a sixth apparatus) with a friction preventing function.

Referring to FIG. 15, the sixth apparatus includes a rotation axis 200 having a predetermined length and a housing 202 that surrounds the rotation axis 200. A wheel holder 204 is provided at both ends of the rotation axis 200. A wheel such as a tire may be mounted on the wheel holder 204.

The rotation axis 200 may be one of a plurality of drive shafts of a vehicle. The housing 202 is surrounding most of the rotation axis 200. The housing 202 is fixed to a vehicle body. The vehicle body is located above the housing 202. The rotation axis 200 and the housing 202 include a brake system. The friction preventing function is applied to the brake system. As the vehicle is being driven, the friction preventing function is applied in the brake system so that the rotation axis 200 does not contact the housing 202. When the vehicle is stopped or speed of the vehicle needs to be reduced during driving, the friction preventing function may be appropriately controlled so that the housing 202 contacts the rotation axis 200. The contact between the housing 202 and the rotation axis 200 refers to brake actuation. The friction preventing function and the brake actuation may be intensified according to a magnitude of a voltage. Appropriately controlling the friction preventing function may refer to adjusting a voltage applied to the brake system.

Next, a structure of the housing 202 and the brake system will be described with reference to FIG. 16. FIG. 16 is a cross-sectional view of FIG. 15 cut along the direction 16-16', which shows a state where a voltage applied so that the friction preventing function is performed, that is, a state where a brake of the vehicle is not actuated.

Referring to FIG. 16, the rotation axis 200 is surrounded by first and second layers 210 and 212 that are sequentially laminated. The first and second layers 210 and 212 is rotated with the rotation axis 200. The rotation axis 200 and the first and second layers 210 and 212 are referred to as a rotor. An outer circumferential surface of the rotation axis 200 is covered with the first layer 210. An outer circumferential surface of the first layer 210 is covered by the second layer 212. The first layer 210 is an insulating layer. The second layer 212 is a conductive layer. For example, the first layer 210 may be a rubber layer, a silicon oxide layer (for example, a SiO2 layer), or an aluminum oxide layer (for example, an Al2O3 layer). The first layer 210 may electrically insulate the second layer 212 from the rotation axis 200 and fix the second layer 212 to the rotation axis 200. For example, the second layer 212 may be automobile steel (i.e., industrial steel) or a wear resisting conductor (i.e., a conductor with a large wear coefficient). The housing 202 surrounds the rotor. However, a gap 220 is located between the housing 202 and the rotor. That is, the housing 202 and the rotor are spaced apart. Therefore, when the friction preventing function is performed in the vehicle, the rotor may be rotated without friction with the housing 202. A size of the gap 220, that is, a distance between the housing 202 and the rotor may be, for example, about 0.1mm to about 5mm. If another material layer is inside the housing 202 as shown in FIG. 16, the distance equals to a distance between the rotor and the other material layer. A passage P1, through which the rotor penetrates, is formed in the housing 202. An inner surface of the passage P1 is covered by a third layer 218. The third layer 218 is an insulating layer that may be, for example, a silicon oxide layer (for example, a SiO2 layer) or an aluminum oxide layer (for example, an Al2O3 layer). The third layer 218 may electrically insulate the housing 202 and the fourth and fifth layers 216a and 216b and fix the fourth and fifth layers 216a and 216b to the housing 202. The third layer 218 includes first and second protrusions 218a and 218b. The first and second protrusions 218a and 218b protrude by predetermined lengths from the third layer 218 toward a center of the passage P1. The first and second protrusions 218a and 218b may have the same length. Ends of the first and second protrusions 218a and 218b contact the gap 220. The first and second protrusions 218a and 218b may face each other having the rotor in between. The first and second protrusions 218a and 218b may be located on a diameter of the passage P1. The fourth and fifth layers 216a and 216b are provided on the third layer 218. That is, a portion of an inner surface of the third layer 218 may be covered by the fourth layer 216a and a remaining portion may be covered with the fifth layer 216b. The fourth and fifth layers 216a and 216b may be conductive layers that are formed of the same material or different materials. The portion of the inner surface of the third layer 218 may be a portion above the first and second protrusions 218a and 218b. The remaining portion of the inner surface of the third layer 218 may be a portion under the first and second protrusions 218a and 218b. The fourth layer 216a and the fifth layer 216b are physically separated from each other by the first and second protrusions 218a and 218b. In detail, if the first and second protrusions 218a and 218b are provided between the fourth layer 216a and the fifth layer 216b, respective protruding lengths of the first and second protrusions 218a and 218b are longer than respective thicknesses of the fourth and fifth layers 216a and 216b. A voltage is applied to prevent friction between the second layer 212 and the fourth and fifth layers 216a and 216b or the brake from being actuated. This will be described below. A sixth layer 214 is provided on the fourth and fifth layers 216a and 216b. In other words, inner surfaces of the fourth and fifth layers 216a and 216b are covered by the sixth layer 214. The sixth layer 214 includes particles that may be electrically charged. The particles are insulated from each other. The sixth layer 214 may be paint or paste that includes the particles. The sixth layer 214 may perform the friction preventing function according to operations of the vehicle or used to actuate the brake. The sixth layer 214 is divided into a portion that covers the inner surface of the fourth layer 216a and a portion that covers an inner portion of the fifth layer 216b. The two portions are separated by the first and second protrusions 218a and 218b. The sixth layer 214 may be slimmer than the fourth and fifth layers 216a and 216b. An inner surface of the sixth layer 214 and an outer circumferential surface of the second layer 212 are spaced apart. A distance between the inner surface of the sixth layer 214 and the outer circumferential surface of the second layer 212 becomes the gap 220 between the housing 202 and the rotor. The layers (218, 216a, 216b, and 214) that are sequentially laminated, the housing 202, and the passage P1 may be referred to as a housing.

FIG. 17 is an enlarged sectional view of an area A11 that includes portions of the second layer 212, the gap 220, the fourth layer 216a, and the sixth layer 214 of FIG. 16.

Referring to FIG. 17, the sixth layer 214 includes a dielectric layer 214a and particles 214b. The particles 214b are distributed in the dielectric layer 214a and do not contact each other. The dielectric layer 214a may contact the rotor when an engine of the vehicle stops or when the brake is actuated. Therefore, the dielectric layer 214a may be a material layer that wears less due to friction with the rotor, that is, a material layer with a large wear coefficient. The dielectric layer 214a may be, for example, a silicon oxide layer or an aluminum oxide layer. The dielectric layer 214a may also be CNx. The particles 214b may be a material that is chargeable and polarized by an external magnetic field, such as atoms, molecules, or nanoparticles. For example, the particles 214b may be aluminum (Al), gold (Au), or silicon (Si). Alternatively, each of the particles 214b may be formed by a group of a plurality of atoms, a group of a plurality of molecules, or a group of a plurality of nanoparticles. Also, each of the particles 214b may have a core-shell structure as shown in FIG. 3, and in this case, the particles 214b may contact each other in the dielectric layer 214a.

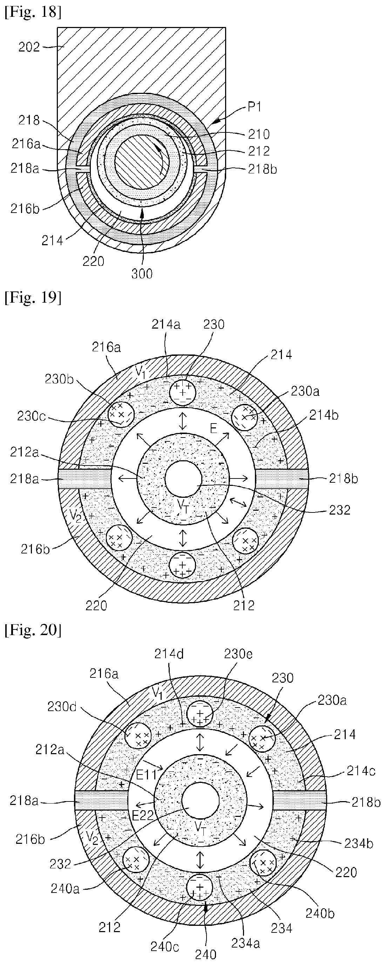

FIG. 18 shows a state of the housing 202 and a rotor 300 when the brake is actuated in the sixth apparatus or the engine of the vehicle is stopped.

Referring to FIG. 18, the rotor 300 may contact the sixth layer 214. Due to the contact, rotation power of the rotor 300 may be decreased (speed reduction) or the rotor 300 may stop rotating. If the brake is released or the vehicle is started, the rotor 300 may be detached from the sixth layer 214. Then, the rotor 300 and the sixth layer 214 may be in a non-contact state as shown in FIG. 16, and thus friction may be prevented. Contact and separation between the rotor 300 and the sixth layer 214 may be determined according to condition of a voltage applied to the rotor 300 and the fourth and fifth layers 216a and 216b of the housing 202. This will be described with reference to FIGS. 19 and 20.

FIG. 19 shows voltage application condition that allows the friction preventing function to be performed in the sixth apparatus. For convenience, portions of the sixth apparatus related to the friction preventing function are only illustrated in FIG. 19. In FIG. 19, an element denoted by the reference numeral 232 represents the rotation axis 200 and the first layer 210 of FIG. 16.

Referring to FIG. 19, a voltage VT is applied to the second layer 212, a voltage V1 is applied to the fourth layer 216a, and a voltage V2 is applied to the fifth layer 216b. A relationship between the voltages VT, V1, and V2 satisfy VT> V1=V2. Under such voltage application condition, an electric field E is generated between the second layer 212 and the fourth and fifth layers 216a and 216b. As the electric field E passes through the sixth layer 214, polarization charges 214a and 214b, which generate electric fields to offset the electric field E, may be generated in the sixth layer. Accordingly, the negative charge 214b is distributed on the inner surface of the sixth layer 214, that is, a surface facing the second layer 212. Also, the positive charge 214a is distributed on an outer circumferential surface of the sixth layer 214, that is, a surface that contacts the inner surfaces of the fourth and fifth layers 216a and 216b. Also, due to the electric field E that passes through the sixth layer 214 because of the same reason, polarization charges 230b and 230c are generated on surfaces of particles 230 in the sixth layer 214. From among the polarization charges 230b and 230c on the particles 230, a negative charge 230c is generated near the inner surface of the sixth layer 214 and a positive charge 230b is generated near the outer circumferential surface of the sixth layer 214. The particles 230 additionally include a charge 230a other than the polarization charges 230b and 230c. The charge 230a is a net charge. The charge 230a is a positive charge. The charge 230a may be formed by additionally applying a voltage between the second layer 212 and the fourth and fifth layers 216a and 216b before applying a voltage for generating the electric field E. An induced charge 212a is generated on a surface of the second layer 212 due to the charge 230a in the particles 230. The induced charge 212a is a negative charge. According to such charge distribution, repulsive force may be generated between the induced charge 212a on the surface of the second layer 212 and the negative charge 230c induced in particles 230 in the sixth layer 214. The repulsive force is increased as the gap 220 between the second layer 212 and the sixth layer 214 is reduced in size. Therefore, unless a strong force is applied from one direction, the gap 220 around a circumference of the second layer 212 may be in uniform. Accordingly, since the gap 220 between the second layer 212 and the sixth layer 214 is maintained under the above-described voltage application condition, friction between the second layer 212 and the sixth layer 214 may be prevented.

The sixth layer 214 may not be provided on the inner surfaces of the fourth and fifth layers 216a and 216b, but provided to cover a surface of the rotor, that is, a surface of the second layer 212. In this case, the voltage application condition may satisfy VT<V1=V2, however, if the charge 230a is a negative charge, the voltage application condition may remain as VT>V1=V2.

FIG. 20 shows voltage application condition that allows the brake to be actuated in the sixth apparatus. For convenience, portions of the sixth apparatus related to the brake actuation are only illustrated in FIG. 20. In FIG. 20, an element denoted by the reference numeral 232 represents the rotation axis 200 and the first layer 210 of FIG. 16.

Referring to FIG. 20, a voltage VTis applied to the second layer 212. A voltage V1 is applied to the fourth layer 216a and a voltage V2 is applied to the fifth layer 216b. A relationship between the voltages VT, V1, and V2 satisfy V1>VT>V2. Due to such voltage application, a first electric field E11, which moves from the fourth layer 216a to the second layer 212, is generated, and a second electric field E22, which moves from the second layer 212 to the fifth layer 216b, is generated. The first electric field E11 passes through the sixth layer 214. Accordingly, polarization charges 214c and 214d), which generate electric fields to offset the first electric field E11, may be generated at an area of the sixth layer 214 corresponding to the fourth layer 216a. From among the polarization charges 214c and 214d, a negative charge 214c is distributed on a surface of the sixth layer 214 which contacts an inner surface of the fourth layer 216a. Also, a positive charge 214d is distributed on the inner surface of the sixth layer 214 which covers the fourth layer 216a. Polarization charges 230d and 230e due to the first electric field E11 are also generated in particles 230 that are distributed in the area of the sixth layer 214 corresponding to the fourth layer 216a. From among the polarization charges 230d and 203e, a negative charge 230d may be generated toward the fourth layer 216a and a positive charge 230e may be generated toward the second layer 212. The particles 230 additionally include the charge 230a. Although the charge 230a is a positive charge, the charge 230a may be a negative charge. The charge 230a may be formed by applying a predetermined voltage between the second layer 212 and the fourth layer 216a before applying a voltage for generating the first electric field E11. Due to such voltage, electrons may be emitted from each of the particles 230, and as a result, each of the particles 230 may have a positive charge as a net charge. Due to the second electric field E22 generated between the second layer 212 and the fifth layer 216b, polarization charges 234a and 234b may be generated on a sixth layer 234 (hereinafter, seventh layer) provided between the second layer 212 and the fifth layer 216b. The seventh layer 234 may be formed of the same material as or a different material from the sixth layer 214. From among the polarization charges 234a and 234b on the seventh layer 234, a negative charge 234a may be generated on a surface of the seventh layer 234 which faces the second layer 212, and a positive charge 234b may be generated on an outer circumferential surface of the seventh layer 234 which contacts the fifth layer 216b. Polarization charges 240b and 240c may be generated in each of particles 240 distributed in the seventh layer 234 due to the second electric field E22. From among the polarization charges 240b and 240c, a negative charge 240b may be generated toward the second layer 212 and a positive charge 240c may be generated toward the fifth layer 216b. The particles 240 additionally include a charge 240a other than the polarization charges 240b and 240c. The charge 240a may be a positive charge or a negative charge. The charge 240a included in each of the particles 240 may be formed by using a method similar to a method of generating the charge 230a included in the particles 230 distributed on the sixth layer 214. That is, the charge 240a may be generated by applying a voltage between the second layer 212 and the fifth layer 216b before applying a voltage for generating the second electric field E22. A negative charge 212a is induced on a surface of the second layer 212 by the charge 230a included in the particles 230 distributed on the sixth layer 214 and the charge 240a included in the particles 240 distributed on the seventh layer 234.

As described above, according to charge distributions of the second layer 212, the sixth layer 214, and the seventh layer 234, gravitational force is applied between the second layer 212 and the sixth layer 214, and repulsive force is applied between the second layer 212 and the seventh layer 234. Therefore, the second layer 212 may be moved to the sixth layer 214 or the sixth layer 214 may be moved to the second layer 212, and thus, the gap 220 between the second layer 212 and the sixth layer 214 may become narrow, whereas a gap between the second layer 212 and the seventh layer 234 may become wide. As a magnitude of a voltage is adjusted under the voltage application condition above, contact intensity between the second layer 212 and the sixth layer 214 may be adjusted. That is, friction intensity between the second layer 212 and the sixth layer 214 may be adjusted. For example, the voltage VT applied to the second layer 212 may be maintained in uniform and the voltage V1 applied to the fourth layer 216a may be adjusted so that friction intensity between the second layer 212 and the sixth layer 214 may be adjusted. While satisfying the above-described voltage application condition, the voltage VT applied to the second layer 212 and the voltage V1 applied to the fourth layer 216a may be simultaneously adjusted. Alternatively, voltages applied to the second layer 212, the fourth layer 216a, and the fifth layer 216b may all be adjusted.

As shown in FIGS. 19 and 20, according to condition of the voltages applied to the second layer 212, the fourth layer 216a, and the fifth layer 216b, a contact state (brake actuation) and a non-contact state (brake release) of the second layer 212, the sixth layer 214, and the seventh layer 234 in the sixth apparatus may be determined. Also, when in contact, contact intensity may be adjusted. Therefore, the rotor, the sixth and seventh layers 214 and 234 around the rotor, the fourth and fifth layers 216a and 216b, and the third layer 218 may configure the brake system.

A method of driving the sixth apparatus is described below.

FIGS. 19 and 20 are referred to.

First, as shown in FIG. 19, an operation for a circumference of the second layer 212 to be in a non-contact state, that is, an operation for the sixth apparatus to perform the friction preventing function, is performed. Specifically, a first voltage is applied between the second layer 212 and the fourth and fifth layers 216a and 216b so that net charges 230a and 240a are generated in the particles 230 and 240 distributed on the sixth and seventh layers 214 and 234. The first voltage may be applied for a short time. The first voltage may be greater than a voltage applied to generate polarization charges on the sixth and seventh layers 214 and 234 and the particles 230 and 240. After applying the first voltage and generating the net charges 230a and 240a in the particles 230 and 240 distributed on the sixth and seventh layers 214 and 234, the voltage VT is applied to the second layer 212, and the voltages V1 and V2 are respectively applied to the fourth and fifth layers 216a and 216b. As described above, a relationship between the voltages VT, V1, and V2 satisfy VT>V1, VT>V2, and V1=V2.

Next, in order to actuate a brake with respect to the rotor, the voltages VT, V1, and V2 are adjusted such that the voltages VT, V1, and V2 satisfy a condition of V1>VT>V2. Intensity of the brake actuation may be adjusted by adjusting the voltages VT, V1, and/or V2 as the condition is satisfied.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A friction preventing apparatus comprising:
a first object (44,50,80,90);
a second object (42,52,82,92) spaced apart from the first object; and
a plurality of charged nanoparticles (40) disposed between the first object and the second object, wherein the nanoparticles are disposed on a surface of one of the first object and the second object, and
wherein there is a potential difference between the first object and the second object;
wherein each of the nanoparticles comprises a conductive core (40a) and an insulative shell (40b) surrounding the core.

2. The apparatus of claim 1, wherein the nanoparticles (40) are positively charged and are adhered to the first object, and wherein the first object has a potential lower than a potential of the second object.

3. The apparatus of claim 1 or 2, wherein the nanoparticles (40) are negatively charged and are adhered to the first object, and wherein the first object has a potential higher than a potential of the second object.

4. The apparatus of any preceding claim, further comprising a material film (70) covering the nanoparticles and filling gaps between the nanoparticles.

5. The apparatus of any preceding claim, wherein the first object (42) has an outer circumferential surface, and the second object surrounds the outer circumferential surface of the first object.

6. The apparatus of any preceding claim, wherein the first object (80) is a flat panel, and the second object (82) is moveable with respect to the first object.

7. The apparatus of any of claims 1 to 5, wherein the first object (50) is a rail, and the second object (52) surrounds the rail.

8. The apparatus of any preceding claim, wherein the first object comprises a conductive layer facing the second object and the second object comprises a conductive layer facing the first object.

9. The apparatus of any of claims 1 to 5 or 8, wherein the first object is a conductive pipe (90), and the second object (92) is disposed inside the pipe and is moveable with respect to the pipe.

10. The apparatus of any preceding claim, wherein the nanoparticles (40) are uniformly distributed in at least one of a plurality of areas on the surface of the one of the first object and the second object.

11. A method of manufacturing a friction preventing apparatus, the method comprising:
attaching a plurality of nanoparticles to a first object;
disposing a second object to face the first object, such that the nanoparticles are disposed between the first object and the second object;
charging the nanoparticles; and
forming a friction-preventing potential difference between the first object and the second object,
wherein each of the nanoparticles comprises a conductive core and an insulative shell surrounding the core.

12. The method of claim 11, wherein the charging of the nanoparticles comprises forming a charging potential difference between the first object and the second object, wherein the charging potential difference is greater than the friction-preventing potential difference.

13. The method of claim 11, or 12 wherein the attaching the plurality of nanoparticles comprises forming a material film that covers the nanoparticles and fills gaps between the nanoparticles.

14. The apparatus of claim 1, 2 or 3, wherein each of the nanoparticles comprises a charged core.

15. The method of claim 11, wherein each of the nanoparticles comprises a charged core.

## Patentansprüche

1. Reibvermeidungsvorrichtung, die Folgendes umfasst:
ein erstes Objekt (44, 50, 80, 90);
ein zweites Objekt (42, 52, 82, 92), das von dem ersten Objekt beabstandet ist; und
eine Vielzahl von geladenen Nanopartikeln (40), die zwischen dem ersten Objekt und dem zweiten Objekt angeordnet sind, wobei die Nanopartikel auf einer Oberfläche von einem des ersten Objekts und des zweiten Objekts angeordnet sind, und
wobei es eine Potenzialdifferenz zwischen dem ersten Objekt und dem zweiten Objekt gibt;
wobei jeder der Nanopartikel einen leitfähigen Kern (40a) und einen isolierenden Mantel (40b) umfasst, der den Kern umgibt.

2. Vorrichtung nach Anspruch 1, wobei die Nanopartikel (40) positiv geladen sind und an dem ersten Objekt anhaften, und wobei das erste Objekt ein niedrigeres Potenzial aufweist als ein Potenzial des zweiten Objekts.

3. Vorrichtung nach Anspruch 1 oder 2, wobei die Nanopartikel (40) negativ geladen sind und an dem ersten Objekt anhaften, und wobei das erste Objekt ein höheres Potenzial aufweist als ein Potenzial des zweiten Objekts.

4. Vorrichtung nach einem vorhergehenden Anspruch, die ferner einen Materialfilm (70) umfasst, der die Nanopartikel umhüllt und Lücken zwischen den Nanopartikeln füllt.

5. Vorrichtung nach einem vorhergehenden Anspruch, wobei das erste Objekt (42) eine äußere Umfangsfläche aufweist, und das zweite Objekt die äußere Umfangsfläche des ersten Objekts umgibt.

6. Vorrichtung nach einem vorhergehenden Anspruch, wobei das erste Objekt (80) ein flaches Paneel ist, und das zweite Objekt (82) in Bezug auf das erste Objekt beweglich ist.

7. Vorrichtung nach einem der Ansprüche 1 bis 5, wobei das erste Objekt (50) eine Schiene ist, und das zweite Objekt (52) die Schiene umgibt.

8. Vorrichtung nach einem vorhergehenden Anspruch, wobei das erste Objekt eine leitfähige Schicht umfasst, die dem zweiten Objekt gegenüberliegt und das zweite Objekt eine leitfähige Schicht umfasst, die dem ersten Objekt gegenüberliegt.

9. Vorrichtung nach einem der Ansprüche 1 bis 5 oder 8, wobei das erste Objekt ein leitfähiges Rohr (90) ist, und das zweite Objekt (92) in dem Rohr angeordnet ist und in Bezug auf das Rohr beweglich ist.

10. Vorrichtung nach einem vorhergehenden Anspruch, wobei die Nanopartikel (40) gleichmäßig in mindestens einer von einer Vielzahl von Gebieten auf der Oberfläche von einem des ersten Objekts und des zweiten Objekts verteilt sind.

11. Verfahren zum Herstellen einer Reibvermeidungsvorrichtung, wobei das Verfahren Folgendes umfasst:
Befestigen einer Vielzahl von Nanopartikeln an einem ersten Objekt;
Anordnen eines zweiten Objekts gegenüber dem ersten Objekt, so dass die Nanopartikel zwischen dem ersten Objekt und dem zweiten Objekt angeordnet sind;
Laden der Nanopartikel; und
Bilden einer Reibvermeidungs-Potenzialdifferenz zwischen dem ersten Objekt und dem zweiten Objekt,
wobei jeder der Nanopartikel einen leitfähigen Kern und einen isolierenden Mantel umfasst, der den Kern umgibt.

12. Verfahren nach Anspruch 11, wobei das Laden der Nanopartikel das Bilden einer Ladungspotenzialdifferenz zwischen dem ersten Objekt und dem zweiten Objekt umfasst, wobei die Ladungspotenzialdifferenz größer ist als die Reibvermeidungs-Potenzialdifferenz.

13. Verfahren nach Anspruch 11 oder 12, wobei das Befestigen der Vielzahl von Nanopartikeln das Bilden eines Materialfilms umfasst, der die Nanopartikel umhüllt und Lücken zwischen den Nanopartikeln füllt.

14. Vorrichtung nach Anspruch 1, 2 oder 3, wobei jeder der Nanopartikel einen geladenen Kern umfasst.

15. Vorrichtung nach Anspruch 11, wobei jeder der Nanopartikel einen geladenen Kern umfasst.

## Revendications

1. Appareil de prévention de frottement comprenant :
un premier objet (44, 50, 80, 90) ;
un second objet (42, 52, 82, 92) espacé du premier objet ; et
une pluralité de nanoparticules chargées (40) disposées entre le premier objet et le second objet, lesdites nanoparticules étant disposées sur une surface de l'un du premier objet et du second objet, et
une différence de potentiel étant présente entre le premier objet et le second objet ;
chacune desdites nanoparticules comprenant un noyau conducteur (40a) et une enveloppe isolante (40b) entourant le noyau.

2. Appareil selon la revendication 1, lesdites nanoparticules (40) étant chargées positivement et adhérant au premier objet et ledit premier objet possédant un potentiel inférieur au potentiel du second objet.

3. Appareil selon la revendication 1 ou 2, lesdites nanoparticules (40) portant une charge négative et adhérant au premier objet et ledit premier objet possédant un potentiel supérieur au potentiel du second objet.

4. Appareil selon l'une quelconque des revendications précédentes, comprenant en outre un film de matériau (70) recouvrant les nanoparticules et remplissant les espaces entre les nanoparticules.

5. Appareil selon l'une quelconque des revendications précédentes, ledit premier objet (42) possédant une surface circonférentielle externe et ledit second objet entourant la surface circonférentielle externe du premier objet.

6. Appareil selon l'une quelconque des revendications précédentes, ledit premier objet (80) étant un panneau plat et ledit second objet (82) étant mobile par rapport au premier objet.

7. Appareil selon l'une quelconque des revendications 1 à 5, ledit premier objet (50) étant un rail et ledit second objet (52) entourant le rail.

8. Appareil selon l'une quelconque des revendications précédentes, ledit premier objet comprenant une couche conductrice faisant face au second objet et ledit second objet comprenant une couche conductrice faisant face au premier objet.

9. Appareil selon l'une quelconque des revendications 1 à 5 ou 8, ledit premier objet étant un tuyau conducteur (90) et ledit second objet (92) étant disposé à l'intérieur du tuyau et étant mobile par rapport au tuyau.

10. Appareil selon l'une quelconque des revendications précédentes, lesdites nanoparticules (40) étant uniformément réparties dans au moins l'une d'une pluralité de zones sur la surface de l'un du premier objet et du second objet.

11. Procédé de fabrication d'un appareil de prévention de frottement, ledit procédé comprenant :
la fixation d'une pluralité de nanoparticules à un premier objet ;
la disposition d'un second objet pour faire face au premier objet de sorte que les nanoparticules soient disposées entre le premier objet et le second objet ;
le chargement des nanoparticules ; et
la formation d'une différence de potentiel de prévention de frottement entre le premier objet et le second objet,
chacune desdites nanoparticules comprenant un noyau conducteur et une enveloppe isolante autour du noyau.

12. Procédé selon la revendication 11, ledit chargement des nanoparticules comprenant la formation d'une différence de potentiel de chargement entre le premier objet et le second objet, ladite différence de potentiel de chargement étant supérieure à la différence de potentiel de prévention de frottement.

13. Procédé selon la revendication 11 ou 12, ladite fixation de la pluralité de nanoparticules comprenant la formation d'un film de matériau recouvrant les nanoparticules et remplissant les espaces entre les nanoparticules.

14. Appareil selon la revendication 1, 2 ou 3, chacune desdites nanoparticules comprenant un noyau chargé.

15. Procédé selon la revendication 11, chacune desdites nanoparticules comprenant un noyau chargé.
